# EUROPEAN PATENT SPECIFICATION

(11) **EP 1 819 233 B1**
(45) Date of publication and mention of the grant of the patent: **09.03.2011**
(21) Application number: 05807912.0
(22) Date of filing: 18.11.2005
(51) Int. Cl.: A23C 19/14, A01J 25/16

(54) **A PROCESS FOR THE RIPENING AND/OR MATURATION, PRESERVATION AND TRANSPORTATION OF CHEESES, AND A DEVICE FOR IMPLEMENTING THE METHOD**
VERFAHREN ZUR REIFUNG UND/ODER MATURIERUNG, KONSERVIERUNG UND ZUM TRANSPORT VON KÄSEN SOWIE GERÄT ZUM DURCHFÜHREN DES VERFAHRENS
PROCEDE D'AFFINAGE ET/OU DE MATURATION, DE CONSERVATION ET DE TRANSPORT DE FROMAGES, ET SON DISPOSITIF DE MISE EN OEUVRE

(30) Priority: 22.11.2004 IT TO20040819
(43) Date of publication of application: 22.08.2007
(73) Proprietor: AFFINTEC GMBH, 6343 Rotkreuz Kt. Zug (CH)
(72) Inventor: GARIGLIO, Gian Marco, I-10024 Moncalieri (Torino) (IT)
(74) Representative: Gerbino, Angelo
(86) International application number: PCT/EP2005/056058
(87) International publication number: WO 2006/053897

(56) References cited:
- EP-A- 1 041 010
- EP-A- 1 072 535
- DE-A1- 19 912 347
- GB-A- 504 092
- PATENT ABSTRACTS OF JAPAN vol. 013, no. 130 (M-808), 30 March 1989 (1989-03-30) -& JP 63 297898 A (YASKAWA ELECTRIC MFG CO LTD), 5 December 1988 (1988-12-05)

## Description

The present invention relates to a process for the ripening and/or maturation, preservation and transportation of cheeses and to a device for implementing the method. Document JP-A- 63 297 898 discloses a device according to the preamble of claim 6.

The conventional technique for the ripening and/or maturation of hard and semi-hard cheeses consists of the storage of the uncovered cheeses in cellars at a predetermined temperature and humidity, generally with three stages:
- a cold storage stage the duration of which is variable according to the ripener and to the season; the temperature generally varies between 4°C and 10°C;
- a stage in a warm cellar at a temperature of between 10°C and 25°C for a period of between three and four weeks;
- a cooling stage prior to sale or cutting-up in a work room; the temperature is about 4°C.

During the warm stage, the cheeses are turned over regularly so as to achieve a satisfactory shape and uniform distribution of holes in the cheese. During this period, the cheeses lose weight by drying. To limit as far as possible the losses due to evaporation, the ripener may alter the humidity of the cellars. If the moisture content of the cellar atmosphere is increased, the weight losses due to evaporation are reduced. However, this technique has two disadvantages:
- the appearance of moulds on the surface of the cheese,
- peeling of the cheeses.

Moreover, this so-called conventional technique is expensive in labour:
- turning in the warm cellar,
- washing of the cheeses during the ripening and/or maturation,
- washing of the cheeses prior to sale or use in cutting rooms.

It also gives rise to considerable weight losses and does not permit an optimal yield during the cutting of portions.

This applies to round and square Emmental, Edam, Gouda etc.

In the particular case of hard and semi-hard cheese with a washed, brushed and salted rind (Gruyère, Raclette, Abondance, etc.) the cheeses are also rubbed with a salted water solution containing selected micro-organisms.

On account of the many disadvantages relating to conventional ripening and/or maturation, a new technique has emerged, that is, ripening and/or maturation under film.

In the days following production, cheeses of all shapes are wrapped in bags sealed under vacuum and are thermally retreated by immersion in a bath of hot water. Moreover, for large cheeses (such as Emmental), it is then necessary to encircle them with a band of rigid film so as to preserve their shape during ripening and/or maturation.

The ripening and/or maturation also comprises three stages:
- a cold storage stage the duration of which is variable according to the ripener and the season; the temperature generally varies between 4°C and 10°C;
- a stage in a warm cellar at a temperature of between 10°C and 22°C for a period of from three to four weeks;
- a cooling stage prior to sale or cutting-up in a work room; the temperature is about 4°C.

In contrast with conventional ripening and/or maturation, the cheeses are not turned over during the warm stage.

With regard to parallelepipedal cheeses (Emmental block, Edam block, Gouda block, etc.) the procedure is identical but it is also necessary to arrange them in boxes; this technique protects the cheeses during handling and preserves the initial shape of the cheeses.

With regard to cheeses with washed, brushed and salted rind, this technique cannot be applied because it is necessary to perform a rubbing of the rind.

The advantages of ripening and/or maturation under film are as follows:
- no loss of weight due to drying,
- elimination of the labour necessary for turning in a warm cellar,
- protection of the rind and no development of moulds.

A ripening process using Films is disclosed in document GB-A- 504,092.

This technique solves the problems of conventional ripening and/or maturation but gives rise to other problems.

The problems of ripening and/or maturation under film are as follows.

### From the economic point of view:

- the investment cost of the film-covering and banding line,
- additional labour for the wrapping of the cheeses,
- the cost of the wrapping bags and the band,
- additional labour for unwrapping the cheeses after ripening and/or maturation,
- the cost of recycling and/or disposing of the plastics bags,
- the loss of fatty substances in the bags during extraction therefrom.

### From a qualitative point of view:

- disappearance of the checked marking of the cheese,
- peeling in the warm cellar,
- more or less significant presence of bubbles or cracks on the surface,
- presence of fatty material on the surface,
- white surface appearance,
- presence of mouldy areas in the event of perforation of the bag,
- more solid, whiter, less proteolyzed cheese.

This technique of ripening and/or maturation under film is therefore not perfect. The bags are fragile and subject to perforation during transfer to the various cellars. It is necessary to check the cheeses after extraction from the film and to clean the mouldy areas.

The object of the present invention is to provide a process for the ripening and/or maturation, preservation and transportation of cheeses and a device for implementing the method which overcomes the above-mentioned problems and is of simple construction and relatively low cost.

The present invention achieves the above-mentioned objects by means of a process for the ripening and/or maturation, preservation and transportation of cheeses and of a device for implementing the method which have the characteristics specified in the appended claims.

Further characteristics and advantages of the present invention will become clear in the course of the following detailed description which is provided purely by way of nonlimiting example with reference to the appended drawings, in which:
- Figures 1-8 represent steps in the processing of cheeses in accordance with the invention,

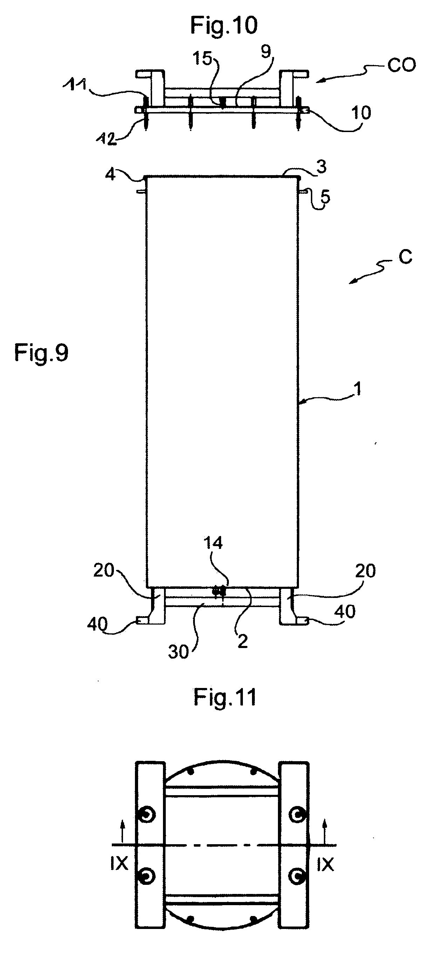

- Figure 9 is a vertical section view through the axis of the lower body of the container which implements the method according to the invention,
- Figure 10 is a view showing the cover of the container of Figure 9 in vertical section view,
- Figure 11 is a plan view, from above, of the whole container of which Figures 9 and 10 show the basic elements, and

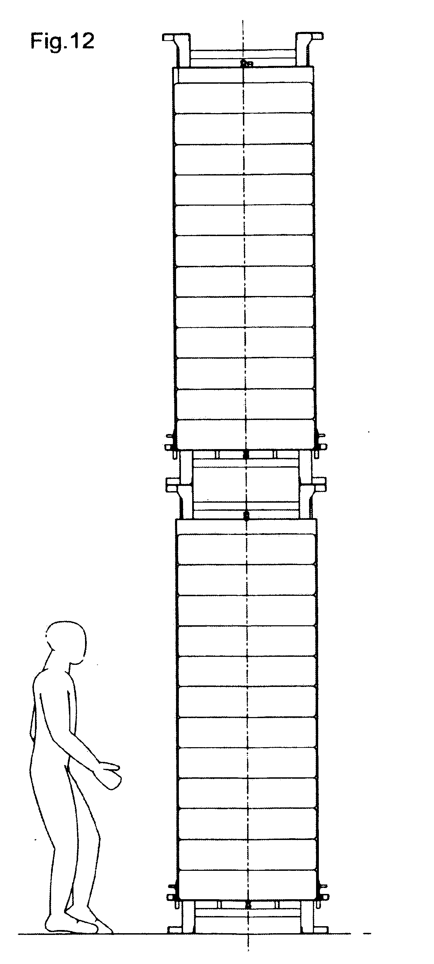

- Figure 12 is a vertical section through a set of two superimposed containers according to the invention.

With reference to the drawings, the container, generally indicated C, comprises a generally cylindrical/square/ rectangular lower portion constituted by a hoop 1 and by a leaktight welded base 2, an upper seal-holding collar 3, a continuous peripheral seal 4, and a rim perforated by eight threaded holes 5.

The cover of the container comprises a plate 9 reinforced by a girdle 10 which also enables the cover to be located perfectly on the container during their assembly. Feet 11 ensure a perfect connection between the girdle 10 and the inclined edge of the plate 9 and distribution of the closure force of eight screws 12 which extend along the axes of the feet 11 and into threaded holes 5 which are arranged to the right of the feet.

To permit easy movement of the container, some U-shaped stainless-steel supports 20, which are connected to one another by means of two welded cross-members 30, are welded to the leaktight welded base 2 and to the plate 9 of the cover; the U-shaped stainless-steel supports are fitted with two shoes 40.

The container formed by its lower portion and by its cover, assembled in a leaktight manner, can thus rest either on its base or on its cover, in an inverted position.

To avoid too great a pressure in the container, a calibrated air valve 13 is mounted on the bottom of the lower portion. The base and the cover are provided with quick connectors 14 and 15 for evacuation and admission of gases, as will be explained below.

The container and its cover can easily be manufactured entirely of stainless steel by known forming, assembly and welding techniques.

The method and the device of the present invention have the purpose of solving the problems inherent in the technique of ripening and/or maturation under film. For this purpose, it is intended to omit the ripening and/or maturation bag and the band, to prevent the development of moulds, to preserve the shape, the colour and the checked marking of the cheese, not to lose weight, and to produce a cheese and a flavour that are worthy of conventionally ripened cheeses.

The method consists principally in ripening the cheeses in a leaktight container which is first of all placed under vacuum and then filled with an inert gas.

In order to solve all of these problems, cylindrical cheeses are ripened by stacking them on top of one another in groups of five or more in a cylindrical bell which has a diameter slightly greater than that of the cheeses and is filled with a mixture of inert gases (for example, CO₂ and N₂).

For parallelepipedal blocks of square or rectangular cross-section, the principle remains the same, the shape of the device will be adapted to the dimensions of the product to be ripened.

For cheese with washed, brushed and salted rind, the system described below may also be applied but, to replace the particular flavour relating to the washed, brushed and salted rind, aromatic gases are injected into the container, giving the cheese the required characteristic flavour and at the same time avoiding the formation of a rind the strong odour of which is displeasing to the consumer and in particular to female consumers. Moreover, this part of the cheese (the rind) is not generally eaten.

For small cheeses, a series of smaller containers are arranged parallel to one another inside the main container so that the assembly has a size appropriate for movement with a lift truck.

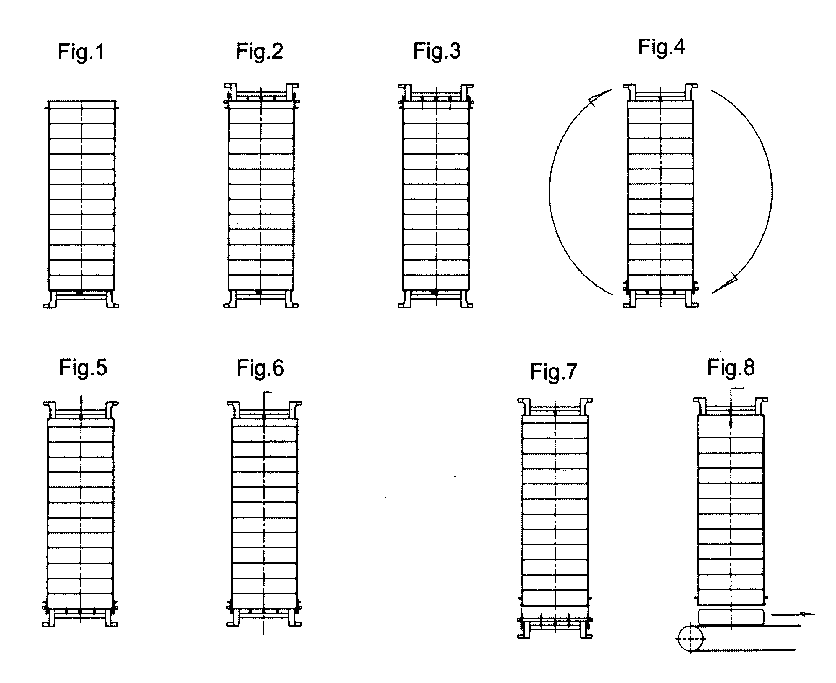

The method according to the invention is as follows: after treatment with brine, the cheeses are introduced directly into a ripening and/or maturation container, without any "film-covering" or other additions; with reference to Figures 1-8, a stack of n cheeses of a height which may vary from 1 to 3 m is thus formed in accordance with Figure 1. Once the container is filled with cheeses, a cover with a completely flat base is arranged in accordance with Figure 2 and then the two portions are assembled in a leaktight manner by means of a quick clamping system and a seal in accordance with Figure 3.

The quick clamping system may be constituted, for example, by eight screws made of nylon or the like or by a system of the "twist-off" type; the sealing system may be constituted by a peripheral seal of rubber suitable for foodstuffs which is disposed at the end of the container on which the cover rests.

In a preferred embodiment of the invention, the container thus formed is turned over and then rests on the cover in accordance with Figure 4. A selected gas (for example, CO₂) is then introduced into the container as shown in Figure 6; the internal air has been removed beforehand by evacuation or is expelled by the excess pressure generated by the admission of the gas, in accordance with Figure 5.

The containers are then put in position in the cellar (or in refrigerator cells) at a regulated temperature and remain there without being handled in any way or turned over for a ripening and/or maturation period identical to that normally used. Naturally, the containers may be superimposed at various levels. During this period, the gases produced by the cheeses are evacuated by means of an automatic calibrated valve so that the pressure inside the container never exceeds a predetermined value.

Upon completion of the ripening and/or maturation, in a preferred embodiment of the invention, the cover, which is positioned at the bottom, is removed as shown in Figure 8 and the cheeses then emerge by gravity one by one, simply allowing the air to enter gently from the base of the container as shown in Figure 8.

It can thus be seen that these cheeses have no development of micro-organisms on the outer rind and are completely undeformed, and that their appearance corresponds to cheeses which have just emerged from the brine, with an extremely fine and completely healthy rind.

### Advantages of the invention

The method is applicable to all cheeses which require ripening and/or maturation before being eaten, whatever their shape and their weight. The quality is of course improved as follows:
- improvement in flavour,
- improvement in the colour of the cheese,
- improvement in the protection of the cheese,
- improvement in proteolysis,
- improvement in structure,
- preservation of the checked marking and natural colour of the rind, the cheese is as if just removed from the mould,
- absence of dry and pungent peripheral areas, the portion can be eaten in its entirety.

In the particular case of types with propionic holes, the complementary improvements are as follows:
- improvement in the distribution of the holes,
- improvement in appearance,
- increase in the number of holes,
- increase in the gloss of the holes.

Food safety is considerably improved from the following points of view:
- protection of the cheese from its emergence from the brine to its packaging,
- elimination of ripening and/or maturation on wooden shelves (risk of foreign bodies),
- reduction in contamination by yeasts and moulds,
- increase in the life of the packaged product.

Naturally, the principle of the invention remaining the same, wide variations may be applied to the embodiments described and illustrated without, however, departing from the scope of protection of the invention as defined in the appended claims.

## Claims

1. A ripening and/or maturation process in which a stack of cheeses without any film-covering is arranged in a leaktight ripening and/or maturing container (c) constituted by one or more bodies of the same cross-section as those of the cheeses contained, increased by a slight clearance over the entire width, and by a cover (60) with a flat base of the same cross-section as the main body, the latter being provided with a seal (4) which ensures complete leaktightness between the two elements.

2. A ripening and/or maturation process according to Claim 1 in which the cheeses are stored in a leaktight container provided with a valve which enables a low and constant pressure to be maintained inside the container.

3. A ripening and/or maturation process according to Claims 1 and 2, in which the cheeses are stored in a leaktight container which is provided with an opening disposed in the base or in the cover with a leaktight closure device of the valve type which permits the introduction of inert gases such as CO₂ and N₂ and aromatic gases.

4. A ripening and/or maturation process according to the preceding claims in which the cheeses are stored in a leaktight container constituted by one or more internal bodies which are assembled in parallel and in which the cheeses of identical cross-section are disposed directly on top of one another to constitute one or more piles of at least five cheeses of a total height which may vary between approximately 1 m and 3 m.

5. A ripening and/or maturation process according to any one of the preceding claims in which the cheeses are stored in a leaktight container into which an inert gas which inhibits moulds and the group of bacteria which develop on cheese rinds is introduced.

6. A device for implementing the process according to Claims 1 to 5, which is constituted by a container (C) comprising a lower portion constituted by a hoop (1), a welded leaktight base (2), an upper seal-holding collar (3), a continuous peripheral seal (4), a perforated rim provided with threaded holes (5), and a cover (CO) comprising
a plate (9) reinforced by a locating girdle (10), said device being
**characterized in that** it comprises feet (11) suitable for permitting connection between the girdle (10) and the inclined edge of the plate (9) and distributing
the closure force of screws (12) extending along the axes of the feet (11) into the threaded holes (5) which are to the right relative to the axes of the feet (11).

7. A device according to Claim 6, **characterized in that** it comprises U-shaped supports connected to one another by welded cross-members (30), the U-shaped supports being fitted with two shoes (40).

## Patentansprüche

1. Reifungs- und/oder Ausreifungsvorgang, bei dem ein Stapel von Käsen ohne irgendwelche Abdeckungen mit einer Folie in einem dichten Reifungs- und/oder Ausreifungsbehälter (C) angeordnet ist, der von einem oder mehreren Körpern, die den selben Querschnitt wie die darin enthaltenen Käse besitzen und über die gesamte Breite mit einem kleinen Spielraum versehen sind, sowie von einer Abdeckung (CO) gebildet wird, die eine ebene Basis mit dem selben Querschnitt wie der Hauptkörper besitzt, wobei der Hauptkörper mit einer Dichtung (4) versehen ist, die eine vollständige Abdichtung zwischen den beiden Elementen sicherstellt.

2. Reifungs- und/oder Ausreifungsvorgang gemäß Anspruch 1, wobei die Käse in einem dichten Behälter gelagert werden, der mit einem Ventil ausgestattet ist, das ermöglicht, dass im Behälter ein niedriger und konstanter Druck aufrechterhalten wird.

3. Reifungs- und/oder Ausreifungsvorgang gemäß den Ansprüchen 1 und 2, wobei die Käse in einem dichten Behälter gelagert werden, der mit einer Öffnung versehen ist, die in der Basis oder in der Abdeckung mit einer dichten Ventil-Verschlussvorrichtung angeordnet ist, die das Einleiten von inerten Gasen, wie etwa CO₂ und N₂, sowie von aromatischen Gasen ermöglicht.

4. Reifungs- und/oder Ausreifungsvorgang gemäß den bisherigen Ansprüchen, wobei die Käse in einem dichten Behälter gelagert werden, der von einem oder mehreren Innenkörpern gebildet wird, die parallel aneinandergefügt sind und in denen die Käse, die den selben Querschnitt besitzen, direkt übereinander angeordnet sind, um einen oder mehrere Stapel von zumindest fünf Käsen mit einer Gesamthöhe zu bilden, die zwischen etwa 1 m und 3 m variieren kann.

5. Reifungs- und/oder Ausreifungsvorgang gemäß irgendeinem der bisherigen Ansprüche, wobei die Käse in einem dichten Behälter gelagert werden, in den ein inertes Gas eingeleitet wird, das Schimmel und die Gruppe von Bakterien unterbindet, die sich auf den Käserinden ausbilden.

6. Vorrichtung zum Ausführen des Verfahrens gemäß den Ansprüchen 1 bis 5, wobei die Vorrichtung von einem Behälter (C) gebildet wird, der einen unteren Teil besitzt, der von einem Reifen (1), einer verschweißten, dichten Basis (2), einem oberen, die Dichtung haltenden Hals (3), einer durchlaufenden Umfangsdichtung (4), einem perforierten Kranz (5), der mit Gewindeöffnungen versehen ist, sowie von einer Abdeckung (CO) gebildet wird, die eine Platte (9) umfasst, die mit einem Einstellkranz (10) verstärkt ist, wobei die Vorrichtung **dadurch gekennzeichnet ist, dass** sie Füße (11) umfasst, die dazu dienen, um eine Verbindung zwischen dem Kranz (10) und der schrägen Kante der Platte (9) herzustellen, und um die Schließkraft von Schrauben (12), die in Richtung der Achsen der Füße (11) verlaufen, in die Gewindeöffnungen (5) zu verteilen, die relativ zu den Achsen der Füße (11) rechts liegen.

7. Vorrichtung gemäß Anspruch 6, **dadurch gekennzeichnet, dass** die Vorrichtung U-förmige Halterungen umfasst, die miteinander über verschweißte Querelemente (30) verbunden sind, wobei die U-förmigen Halterungen mit zwei Schuhen (40) versehen sind.

## Revendications

1. Procédé d'affinage et/ou de maturation dans lequel une pile de fromages sans aucun film de recouvrement est disposée dans un contenant d'affinage et/ou de maturation étanche (C) constitué par un ou plusieurs corps qui présentent la même section transversale que celle des fromages contenus, augmentée d'un léger espace libre sur toute la largeur, et par un couvercle (CO) qui présente une base plate dont la section transversale est identique à celle du corps principal, ce dernier étant doté d'un joint d'étanchéité (4) qui assure une étanchéité totale entre les deux éléments.

2. Procédé d'affinage et/ou de maturation selon la revendication 1, dans lequel les fromages sont stockés dans un contenant étanche doté d'une soupape qui permet de maintenir une pression faible et constante à l'intérieur du contenant.

3. Procédé d'affinage et/ou de maturation selon les revendications 1 et 2, dans lequel les fromages sont stockés dans un contenant étanche qui est doté d'une ouverture disposée dans la base ou dans le couvercle avec un dispositif de fermeture étanche du type à soupape qui permet l'introduction de gaz inertes, tels que du CO₂ et du N₂, et de gaz aromatiques.

4. Procédé d'affinage et/ou de maturation selon l'une quelconque des revendications précédentes, dans lequel les fromages sont stockés dans un contenant étanche constitué par un ou plusieurs corps intérieurs qui sont assemblés en parallèle et dans lesquels les fromages qui présentent une section transversale identique sont disposés directement les uns sur les autres de manière à constituer une ou plusieurs piles d'au moins cinq fromages pour une hauteur totale qui peut varier entre 1 m et 3 m environ.

5. Procédé d'affinage et/ou de maturation selon l'une quelconque des revendications précédentes, dans lequel les fromages sont stockés dans un contenant étanche dans lequel est introduit un gaz inerte qui empêche le développement de moisissures et de groupes de bactéries sur les croûtes des fromages.

6. Dispositif destiné à mettre en application le procédé selon l'une quelconque des revendications 1 à 5, qui est constitué par un contenant (C) qui comprend une partie inférieure constituée par un cercle (1), une base étanche soudée (2), un collier de maintien de joint supérieur (3), un joint périphérique continu (4), une couronne perforée dotée de trous taraudés (5), et un couvercle (CO) qui comprend une plaque (9) renforcée par une ceinture de repérage (10), ledit dispositif étant **caractérisé en ce qu'**il comprend des pieds (11) appropriés pour permettre un raccordement entre la ceinture (10) et le bord incliné de la plaque (9) et répartir la force de fermeture des vis (12) qui s'étendent le long des axes des pieds (11) dans les trous taraudés (5) qui se situent vers la droite par rapport aux axes des pieds (11).

7. Dispositif selon la revendication 6, **caractérisé en ce qu'**il comprend des supports en forme de U raccordés les uns aux autres par des traverses soudées (30), les supports en forme de U étant dotés de deux semelles (40).
